# EUROPÄISCHE PATENTSCHRIFT

(11) **EP 3 746 757 B1**
(45) Veröffentlichungstag und Bekanntmachung des Hinweises auf die Patenterteilung: **05.01.2022**
(21) Anmeldenummer: 19701856.7
(22) Anmeldetag: 25.01.2019
(51) Int. Cl.: G01L 5/06, G01L 5/10

(54) **VORRICHTUNG ZUM ERFASSEN DER BANDSPANNUNG EINES GURTBANDES**
DEVICE FOR SENSING THE STRAP TENSION OF A BELT STRAP
DISPOSITIF DE DÉTECTION DE LA TENSION D'UNE SANGLE

(30) Priorität: 29.01.2018 DE 202018100475 U
(43) Veröffentlichungstag der Anmeldung: 09.12.2020
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Andrejewski - Honke Patent- und Rechtsanwälte Partnerschaft mbB
(86) Internationale Anmeldenummer: PCT/EP2019/051896
(87) Internationale Veröffentlichungsnummer: WO 2019/145501

(56) Entgegenhaltungen:
- WO-A1-97/09595
- DE-U1-202011 050 268
- US-B1- 6 237 413

## Beschreibung

Die Erfindung betrifft eine Vorrichtung zum Erfassen der Bandspannung eines Gurtbandes, insbesondere Zurrgurtes, mit einem gegen eine Bandoberfläche anstellbaren sowie in einem Gehäuse geführten Messelement, wobei das Messelement zweiteilig mit im Gehäuse aufgenommenem Führungsabschnitt und gegen die Bandoberfläche anstellbaren Messabschnitt ausgebildet ist und wobei der Messabschnitt als zwei Führungsschenkel gurtbandseitig verbindender Messsteg ausgebildet ist, und mit zumindest einem dem Messelement zugeordneten Sensor, wobei der Sensor Verformungen des Messelementes bei dessen das Gurtband in eine spannungsproportionale Auslenkung zwingenden Anlage erfasst, und wobei das Messelement mit Hilfe einer entlang einer Steuerkurve verfahrbaren Handhabe an das Gurtband angestellt wird.

Vorrichtungen zum Erfassen der Bandspannung eines Gurtbandes sind in vielfältiger Art und Weise bekannt. So kennt man durch die EP 0 902 266 A2 eine Vorrichtung zum Erfassen der Bandspannung eines Gurtbandes, die mit einer federelastischen Führung arbeitet. Die federelastische Führung verfügt über einen in ein Stempelgehäuse eintauchenden Auslenkstempel. Die Feder wird nun nach Maßgabe des Spannungszustandes des zugehörigen Gurtbandes komprimiert. Hierzu korrespondiert eine bestimmte Eintauchtiefe des Auslenkstempels, welche mit Hilfe einer Spannungsanzeigeskala erfasst werden kann. Das geschieht auf mechanischem Wege.

Eine andere und ebenfalls mechanisch arbeitende Vorrichtung zum Erfassen der Bandspannung eines Gurtbandes wird in der DE 41 00 245 C2 beschrieben. Hier ist eine zwischen zwei ortsfesten Führungen federelastisch abgestützte Führung vorgesehen. Das Gurtband wird auf der federelastischen Führung aus einem gestreckten Verlauf in eine spannungsproportionale Auslenkung gezwungen. Der federelastischen Führung ist eine Spannungsanzeigeskala zum Anzeigen des Spannungszustandes des ausgelenkten Gurtbandes zugeordnet. Die bekannte Vorrichtung kann beispielsweise an eine Ratsche oder ein vergleichbares Spannelement angeschlossen werden.

Daneben kennt man im Stand der Technik Vorrichtungen zum Erfassen der Bandspannung eines Gurtbandes, die sensorisch arbeiten, wie dies beispielsweise in der US 2011/0001627 A1 beschrieben wird. Hier ist eine Ratsche realisiert, die mit einer Einrichtung zur Messung der Bandspannung ausgerüstet ist. Zu diesem Zweck ist ein Sensor realisiert, welcher an einem Ratschenkörper befestigt ist. Je nach anliegender Bandspannung wird der Ratschenkörper verformt und werden entsprechende Verformungen mit Hilfe des Sensors erfasst und beispielsweise auf einer Anzeige wiedergegeben.

Im Stand der Technik nach der GB 2 063 494 A ist ein Biegeelement als Messelement realisiert, dessen Verformungen mit Hilfe darauf angebrachter Widerstandselemente als Sensoren ermittelt werden. Das Messelement bzw. ein hiermit zusammenwirkender Stempel sind in einem zugehörigen Gehäuse gelagert bzw. werden hierin geführt. Die in diesem Zusammenhang realisierten mehreren Sensoren sind insgesamt an eine Steuereinheit zur Auswertung angeschlossen.

Eine vergleichbare Vorrichtung zum Erfassen der Bandspannung eines Gurtbandes wird ferner in der EP 1 783 473 A2 vorbeschrieben. Auch in diesem Fall wird das Gurtband von einem geradlinigen Verlauf ausgehend in eine spannungsproportionale Auslenkung gezwungen, die mit Hilfe einer zugehörigen Messanordnung erfasst wird. Dazu ist ein Bolzen vorgesehen, welchem ein druckempfindliches Schaltelement zugeordnet ist. Der Bolzen ist zusammen mit zwei weiteren Bolzen an einem Tragbügel angeordnet. Der Bolzen mit dem druckempfindlichen Schaltelement respektive dem Sensor ist gegenüber dem Tragbügel verschiebbar. Außerdem sind der Messanordnung mehrere Anzeigegeräte zugeordnet. Für die Verbindung der Messanordnung mit den Anzeigegeräten werden sowohl elektrische Leitungen als auch eine Funkverbindung beschrieben. Außerdem kann eine Anzeige und Auslösung von optischen, akustischen und/oder mechanischen Alarmmeldungen erfolgen.

Der gattungsbildende Stand der Technik wird in der nächstkommenden Schrift US 6,237,413 B1 beschrieben. Da die Verformung des Messelementes rein mechanisch angezeigt wird, ist eine Fernübertragung und auch Auswertung nicht erforderlich. Weiterer Stand der Technik ist aus DE 20 2011 050268 U1 bekannt.

Zwar sind Sensoren zur Lastaufnahme durch die WO 97/09595 A1 grundsätzlich bekannt. Allerdings ist auch in diesem Fall eine anschließende elektronische Auswertung de facto nicht möglich.

Der Stand der Technik hat sich grundsätzlich bewährt. Allerdings fehlen bisher überzeugende Lösungen dahingehend, das Messelement an die Bandoberfläche anstellen zu können. Tatsächlich versucht man typischerweise, einen solchen Anstellvorgang mechanisch mit Hilfe einer Handhabe zu realisieren, damit die fragliche Vorrichtung an beliebigen Stellen eines Gurtbandes angesetzt und zur Erfassung der Bandspannung genutzt werden kann. Das heißt, die in der Regel geforderte Mobilität und Flexibilität setzt im Allgemeinen voraus, dass das Messelement mit Hilfe einer Handhabe manuell von einem Bediener an das Gurtband angestellt und mit ihm auch die Messung durchgeführt wird. Zwar sind grundsätzlich auch motorische Lösungen denkbar. Allerdings erfordern diese einen zusätzlichen Antrieb, sind folglich besonders schwer bzw. benötigen eine spezielle elektrische Energieversorgung, die im rauen Alltagsbetrieb in der Regel nicht zur Verfügung steht oder nur schwer realisiert werden kann. Sofern im Rahmen der US 2011/0001627 A1 die Bandspannung unmittelbar in Verbindung mit einer Gurtratsche gemessen wird, sind zwar bereits entsprechend ausgelegte und geeignete Handhaben vorhanden. Allerdings ist die bekannte Lösung auf Ratschen beschränkt.

Das heißt, bisher fehlen überzeugende Konzepte dahingehend, die Bandspannung eines Gurtbandes einfach und schnell sowie flexibel und an jedem denkbaren Ort messen zu können, wobei zugleich die weitergehende Möglichkeit geschaffen werden soll, die erfassten Sensorwerte bei Bedarf anzuzeigen, gegebenenfalls an einen entfernten Ort zu übertragen und hier zu speichern, weiter zu verarbeiten etc.. Hier setzt die Erfindung ein.

Der Erfindung liegt das technische Problem zugrunde, eine derartige Vorrichtung zum Erfassen der Bandspannung eines Gurtbandes so weiter zu entwickeln, dass die Handhabung besonders einfach ist und die Vorrichtung flexibel an jedem Ort des Gurtbandes angesetzt werden kann sowie zugleich die Möglichkeit eröffnet, die erfassten Werte für die Bandspannung elektronisch auszuwerten.

Zur Lösung dieser technischen Problemstellung ist eine gattungsgemäße Vorrichtung nach Anspruch 1 zum Erfassen der Bandspannung eines Gurtbandes im Rahmen der Erfindung dadurch gekennzeichnet, dass der Sensor als auf Verformungen des Messsteges reagierender Dehnungsmessstreifen ausgebildet ist, wobei eine Steuereinheit zur Auswertung des Signals des Sensors vorgesehen ist, und wobei eine Sende-/Empfangseinheit an die Steuereinheit angeschlossen ist, um über die Sende-/Empfangseinheit die mit Hilfe der Steuereinheit erfassten Werte für die Verformung des Messsteges und die daraus abgeleiteten Werte der Bandspannung des Gurtbandes insgesamt an einen externen Empfänger bzw. einer Auswerteeinheit zu übermitteln.

Die Erfindung geht zunächst einmal von der Erkenntnis aus, dass die Erfassung der Bandspannung des Gurtbandes von besonderer Bedeutung ist, insbesondere was etwaige Sicherheitsaspekte, die Einhaltung von Normen etc. angeht. Das heißt, Gurtbänder und zugehörige Spannvorrichtungen wie beispielsweise Gurtratschen sind üblicherweise bis zu einer maximal möglichen Bandspannung ausgelegt. Sofern die Bandspannung höher ist, können Beschädigungen der Spannvorrichtung und/oder des Gurtbandes nicht ausgeschlossen werden. Damit es nicht zu solchen erhöhten Bandspannungen kommt, ist es unerlässlich, die Bandspannung des Gurtbandes zu messen und gegebenenfalls Gegenmaßnahmen zu ergreifen bzw. höher belastbare Elemente einzusetzen, falls dies erforderlich ist.

Erfindungsgemäß kann nun die Bandspannung des Gurtbandes besonders einfach, flexibel und auf manuelle Art und Weise derart erfasst werden, dass das Messelement mit Hilfe der entlang der Steuerkurve verfahrbaren Handhabe an das Gurtband angestellt wird. Die Handhabe beaufschlagt folglich das Messelement. Sobald die Handhabe das Messelement von einer Ruhestellung in eine Messstellung überführt, sorgt die Steuerkurve dafür, dass derartige Vorgänge problemlos von einem Bediener realisiert und umgesetzt werden können. Hierfür sorgt im Kern die Steuerkurve.

Tatsächlich ist meistens die Auslegung so getroffen, dass die Handhabe als in einem Drehpunkt an das Gehäuse angelenkter Schwenkhebel ausgebildet ist. Außerdem hat es sich in diesem Zusammenhang bewährt, wenn die Handhabe zweiteilig mit einem Betätigungsarm und einem die Steuerkurve aufweisenden Steuerarm ausgebildet ist. In der Regel ist der Steuerarm im Drehpunkt an das Gehäuse drehbar angeschlossen.

Ein Bediener beaufschlagt folglich im Allgemeinen die als Schwenkhebel ausgebildete Handhabe. Hierzu arbeitet der Bediener auf den Betätigungsarm und sorgt auf diese Weise für die gewünschte Schwenkbewegung, mit deren Hilfe das an die Handhabe angeschlossene Messelement von seiner Ruhestellung in die Messstellung überführt wird. Die Beaufschlagung des Betätigungsarms der Handhabung hat zugleich zur Folge, dass der in der Regel einstückig mit dem Betätigungsarm ausgebildete Steuerarm mit der darin befindlichen Steuerkurve ebenfalls verschwenkt wird. Die Schwenkbewegung des Schwenkhebels wird dabei insgesamt auf die Steuerkurve übertragen. Das heißt, der Schwenkhebel wird bei seiner Schwenkbewegung und beim Übergang des Messelementes von der Ruhestellung zur Messstellung entlang der Steuerkurve bewegt.

Da die Steuerkurve vorteilhaft spiralförmig mit einem von der Ruhestellung zur Messstellung zunehmenden Radius ausgebildet ist, lässt sich die Handhabe besonders intuitiv und aufwandsarm verschwenken und folglich das Messelement an die Bandoberfläche anstellen. Das gilt auch für den Fall, dass relativ große Bandspannungen des Gurtbandes gemessen werden sollen.

Tatsächlich ist die Steuerkurve als Steuernut zur Aufnahme und Führung eines an das Messelement angeschlossenen Steuerbolzens ausgebildet. Sobald also der Schwenkhebel von einem Bediener verschwenkt wird, bewegt sich der Steuerbolzen entlang der als Steuernut ausgeführten Steuerkurve und wird entsprechend das Messelement durch den daran angeschlossenen Steuerbolzen von seiner Ruhestellung in die Messstellung überführt. Da die Steuerkurve respektive die Steuernut insgesamt spiralförmig mit von der Ruhestellung zur Messstellung zunehmendem Radius ausgebildet ist, wird insgesamt der Steuerbolzen in Bezug auf den Drehpunkt, mit welchem der Schwenkhebel an das Gehäuse mit dem darin geführten Messelement drehbar angeschlossen ist, mit wachsendem Drehmoment beaufschlagt. Denn der Steuerbolzen bewegt sich entlang der Steuernut, welche gegenüber dem fraglichen Drehpunkt einen zunehmenden Radius beschreibt.

Unter der Annahme einer gleichbleibenden Kraft, mit welcher der Schwenkhebel an dem Betätigungsarm von dem Bediener beaufschlagt wird, resultiert hieraus ein wachsendes Drehmoment, mit dem der Schwenkhebel auf den Steuerbolzen arbeitet und folglich das Messelement gegen die Bandoberfläche anstellt. Auf diese Weise wird die Anstellbewegung mit wachsendem Drehmoment seitens eines Bedieners vollführt und lässt sich damit besonders intuitiv und feinfühlig umsetzen. Das ist bei den bisherigen gattungsgemäßen Vorrichtungen in dieser Konsequenz und Ausprägung nicht möglich.

Das Messelement ist erfindungsgemäß zweiteilig mit im Gehäuse aufgenommenem Führungsabschnitt und gegen die Bandoberfläche anstellbarem Messabschnitt ausgebildet. Der Führungsabschnitt weist im Wesentlichen zwei Führungsschenkel auf. Erfindungsgemäß handelt es sich bei dem Messabschnitt um einen die beiden Führungsschenkel gurtbandseitig, d. h. dem Gurtband zugewandt, verbindenden Messsteg. Der Messsteg weist in Messstellung des Messstempels sowie bei Anlage am Gurtband einem Biegebalken vergleichbare Verformungen auf.

Diese Verformungen ähnlich eines Biegebalkens seitens des Messsteges können von dem Sensor einfach erfasst werden. Denn bei dem Sensor handelt es sich erfindungsgemäß um einen auf Verformungen des Messsteges reagierenden Sensor. Dieser ist als Dehnungsmessstreifen ausgeführt. Meistens sind mehrere Sensoren vorgesehen, die darüber hinaus und beispielhaft in einer Zwei- oder Vierbrückenschaltung miteinander verbunden sind. Man spricht hier von einer sogenannten Wheatstoneschen Brücke. Dadurch steht ausgangsseitig der fraglichen Brückenschaltung ein signifikantes Messsignal zur Verfügung, welches von der Verformung des Messsteges und damit der Bandspannung des untersuchten Gurtbandes abhängt.

Darüber hinaus ist erfindungsgemäß noch die Steuereinheit zur Auswertung des Signals des einen oder der mehreren Sensoren vorgesehen. Außerdem und von besonderer Bedeutung kann zusätzlich noch ein an die Steuereinheit angeschlossener Temperatursensor zur Temperaturkompensation des Messsignals der Sensoren vorgesehen sein. Bekanntermaßen sind solche Sensoren bzw. Dehnungsmessstreifen hinsichtlich ihres abgegebenen Signals empfindlich in Bezug auf etwaige Temperaturschwankungen. Das lässt sich darauf zurückführen, dass je nach Temperatur der Widerstand eines solchen Dehnungsmessstreifens geändert wird. Um an dieser Stelle eine Temperaturkompensation vorzunehmen, ist vorteilhaft der zusätzliche und an die Steuereinheit angeschlossene Temperatursensor realisiert. Dadurch kann das Signal der Dehnungsmessstreifen bzw. des einen oder der mehreren Sensoren hinsichtlich etwaiger Temperatureffekte kompensiert und ausgeglichen werden.

Schließlich hat es sich in diesem Zusammenhang noch als besonders günstig erwiesen, wenn eine Sende-/Empfangseinheit und optional ein Display an die Steuereinheit angeschlossen sind. Dadurch können die mit Hilfe des Sensors erfassten und seitens der Steuereinheit ausgewerteten sowie gegebenenfalls hinsichtlich der Außentemperatur kompensierten Messwerte unmittelbar zur Anzeige auf dem Display gebracht werden. Die fraglichen Messwerte können so über die Sende-/ Empfangseinheit an eine entfernte Auswerteeinheit übermittelt werden. Das kann eine Auswerteeinheit beispielsweise im Innern eines Kraftfahrzeuges sein oder auch entfernt von der erfindungsgemäßen Vorrichtung an einem ganz anderen Ort. Dadurch besteht die Möglichkeit, beispielsweise die erfindungsgemäße Vorrichtung an einem Gurtband festzulegen und die Bandspannung über einen bestimmten Zeitraum zu messen. Auch eröffnet sich hierdurch die weitere Möglichkeit, verschiedene Vorrichtungen an unterschiedlichen Orten zur Messung mehrerer unterschiedlicher Bandspannungen an Gurtbändern gleichzeitig zu erfassen und beispielsweise über die Zeit auszuwerten.

Im Ergebnis wird eine Vorrichtung zum Erfassen der Bandspannung eines Gurtbandes zur Verfügung gestellt, die nicht nur aufgrund ihrer sensorischen Erfassung der Bandspannung besonders genau und reproduzierbar arbeitet, sondern die zusätzliche Möglichkeit eröffnet, die erfassten Sensorwerte elektronisch weiter zu verarbeiten. Dadurch können auch zeitliche Entwicklungen beobachtet werden.

Das alles gelingt unter Berücksichtigung einer mobilen Anordnung. Denn die erfindungsgemäße Vorrichtung kann vorteilhaft mit einem Akkumulator oder einer Batterie ausgerüstet werden, mit deren Hilfe die Sensoren und/oder die Steuereinheit mit der erforderlichen elektrischen Energie versorgt werden. Vergleichbares gilt auch für das Display und die Sende-/Empfangseinheit.

Darüber hinaus kann mit Hilfe der Sende-/Empfangseinheit nicht nur ein Signal an eine entfernte Einheit bzw. Auswerteeinheit übermittelt werden, sondern grundsätzlich lassen sich auch von dort Werte an die Sende-/Empfangseinheit senden, beispielsweise Vergleichswerte eines ähnlich aufgebauten Gurtbandes, die zusammen mit den hiesigen Werten insgesamt auf dem Display zur Anzeige gebracht werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: Die erfindungsgemäße Vorrichtung perspektivisch,
- **Fig. 2**: eine Seitenansicht auf den Gegenstand nach Fig. 1 teilweise im Schnitt und
- **Fig. 3**: das Messelement im Detail in Verbindung mit dem schematisch angedeuteten Spannungsverlauf bei einer Verformung durch das Gurtband.

In den Figuren ist eine Vorrichtung zum Erfassen der Bandspannung eines Gurtbandes 1 dargestellt. Bei dem Gurtband 1 kann es sich um einen Zurrgurt 1 handeln, also ein Gurtband, mit dessen Hilfe fest zu zurrende Gegenstände wie beispielsweise Kraftfahrzeuge, Güter etc. auf einer zugehörigen Fläche festgespannt oder abgespannt werden. Das Gurtband bzw. der Zurrgurt 1 kann aus gewebten Kunststofffäden aufgebaut sein. Das gilt jedoch nur beispielhaft und ist keineswegs einschränkend. Die fragliche Vorrichtung verfügt in ihrem grundsätzlichen Aufbau über eine Basis 2. Die Basis 2 ist im Ausführungsbeispiel und im Schnitt L-förmig ausgeführt.

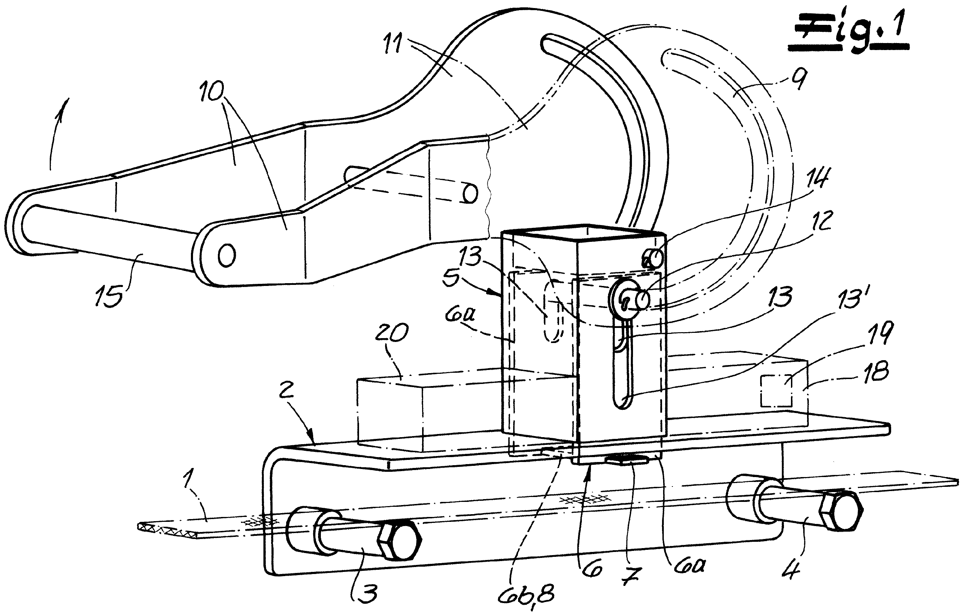

Außerdem sind an die Basis 2 ortsfeste Führungen 3, 4 angeschlossen. Über die ortsfesten Führungen 3, 4 wird das Gurtband bzw. der Zurrgurt 1 geführt, um dessen Gurtspannung zu messen. Dazu wird die Basis 2 mit den Führungen 3, 4 so über das Gurtband bzw. den Zurrgurt 1 geschoben, wie dies in der Fig. 1 angedeutet und wiedergegeben ist.

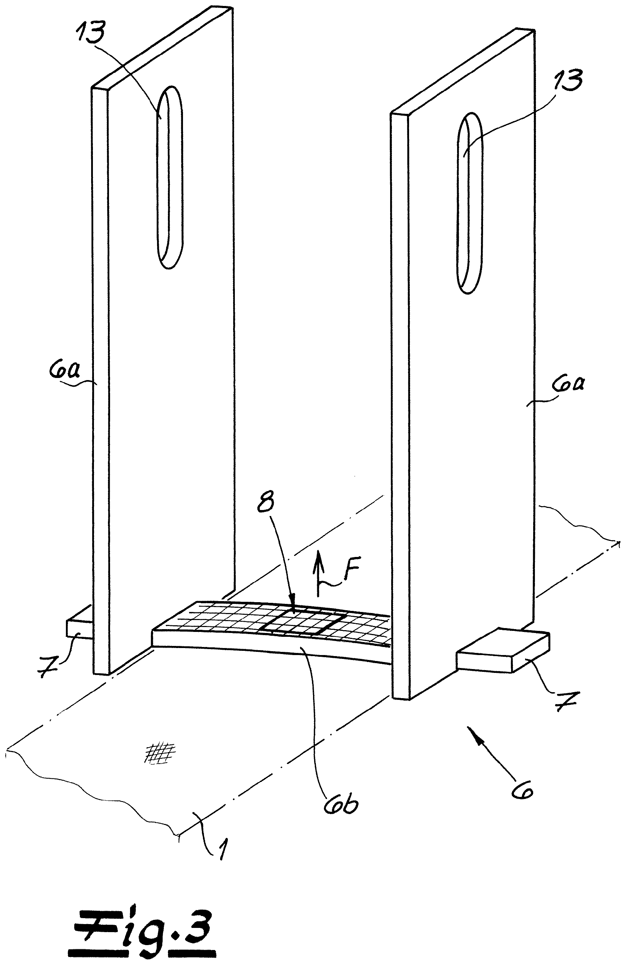

Die Basis 2 trägt ein Gehäuse 5, in welchem ein in der Fig. 3 im Detail dargestelltes Messelement 6 geführt wird. Das Gehäuse 5 ist im Ausführungsbeispiel quaderförmig ausgelegt. Bei dem Messelement 6 handelt es sich um einen Messstempel, welcher gegen die Bandoberfläche des Gurtbandes 1 bzw. Zurrgurtes 1 zum Erfassen der Bandspannung angestellt wird, wie dies nachfolgend noch näher erläutert wird.

Im Detail ist das Messelement 6 im Wesentlichen zweiteilig ausgeführt. Tatsächlich verfügt das Messelement 6 über einen im Gehäuse 5 aufgenommenen Führungsabschnitt 6a einerseits und einem Messabschnitt 6b andererseits. Der Messabschnitt 6b wird gegen die Bandoberfläche des Gurtbandes 1 angestellt, wie dies nachfolgend noch näher erläutert wird. Anhand der Detaildarstellung in der Fig. 3 erkennt man, dass der Messabschnitt 6b als die beiden Führungsschenkel 6a gurtbandseitig verbindender Messsteg 6b ausgebildet ist.

Der Messsteg 6b weist in Messstellung des Messstempels 6 sowie bei Anlage am Gurtband 1 einem Biegebalken vergleichbare Verformungen auf. Das heißt, der Messsteg 6b verhält sich vergleichbar einem aus dem Maschinenbau bekannten Biegebalken und kann folglich ähnlich mathematisch betrachtet und mit Hilfe beispielsweise sogenannter FEM (Finite Elemente Methode)-Modelle betrachtet und dessen Verformungen wie in der Fig. 3 angedeutet wiedergegeben werden. Diese Verformungen sind insbesondere in der Fig. 3 dargestellt. Dort erkennt man den fraglichen Messstempel 6 inklusive angedeuteter Kraft F.

Diese Kraft F ist überwiegend vertikal und parallel zu den beiden Führungsschenkeln 6a orientiert und ergibt sich aufgrund der Tatsache, dass das Gurtband bzw. der Zurrgurt 1 mit Hilfe des Messelementes 6 in der Messstellung in eine spannungsproportionale Auslenkung gezwungen wird. Als Folge der angreifenden und vom Gurtband 1 aufgebauten Kraft F kommt es zu Verformungen des Messabschnittes bzw. Messsteges 6b des Messelementes 6, die in der Fig. 3 durch entsprechende Spannungsverläufe dargestellt sind. Die Deformation des Messsteges 6b aufgrund der angreifenden Kraft F, welche von der Auslenkung des Gurtbandes 1 resultiert, wird mit Hilfe eines nachfolgend noch im Detail zu beschreibenden Sensors 8 erfasst.

Der Sensor 8 ist folglich dem Messelement 6 zugeordnet. Außerdem erfasst der Sensor 8 Verformungen des Messelementes 6 bei dessen das Gurtband 1 in eine spannungsproportionale Auslenkung zwingenden Anlage. Zu diesem Zweck wird das Messelement 6 erfindungsgemäß mit Hilfe einer entlang einer Steuerkurve 9 verfahrbaren Handhabe 10, 11 an das Gurtband 1 angestellt und werden die entsprechenden Verformungen des Messelementes 6 bzw. des Messsteges 6b mit Hilfe des Sensors 8 ermittelt.
In der Fig. 1 ist das Messelement 6 in seiner Ruhestellung wiedergegeben. In dieser Ruhestellung ist das Messelement 6 nicht gegen eine Bandoberfläche des Gurtbandes 1 angestellt. Vielmehr findet sich zwischen der fraglichen Bandoberfläche bzw. dem Gurtband 1 und dem Messsteg 6b ein Abstand. Man erkennt außerdem, dass ein an das Messelement 6 angeschlossener Steuerbolzen 12 gegenüber der Steuerkurve 9 eine Endposition einnimmt. Tatsächlich ist die Steuerkurve 9 als Steuernut 9 zur Aufnahme und Führung des an das Messelement 6 angeschlossenen Steuerbolzens 12 ausgebildet. Der Steuerbolzen 12 ist kopfseitig an den Messstempel 6 angeschlossen. Dazu sind jeweils in den Führungsschenkeln 6a des Messelementes 6 Langlöcher 13 und im Gehäuse 5 Langlöcher 13' vorgesehen, in welchen der Steuerbolzen 12 geführt wird.

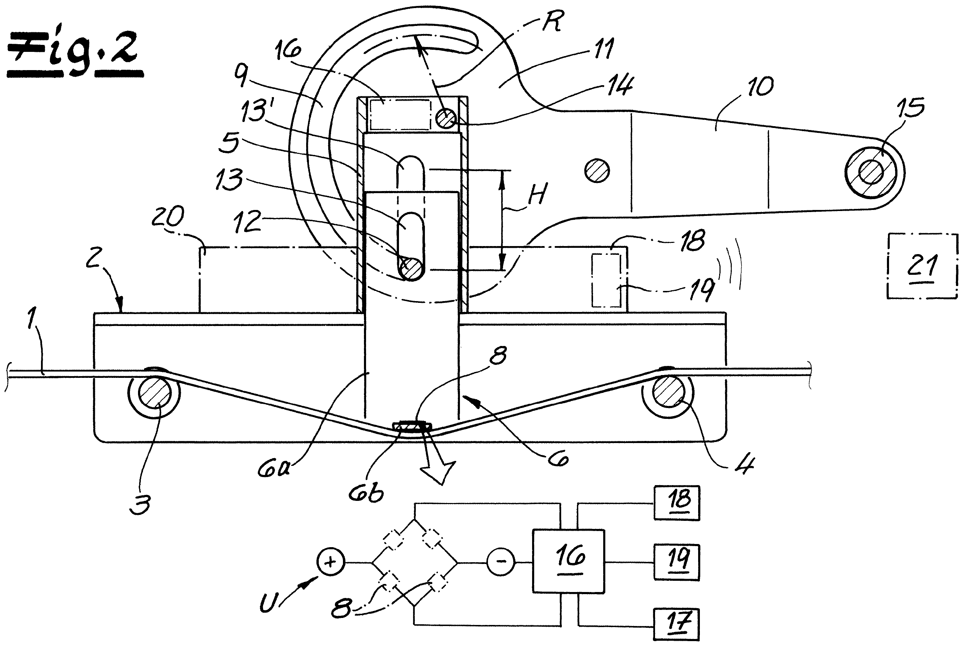

Man erkennt, dass die Steuerkurve bzw. Steuernut 9 insgesamt spiralförmig mit von der in der Fig. 1 dargestellten Ruhestellung zur Messstellung entsprechend der Darstellung in der Fig. 2 zunehmendem Radius R ausgerüstet ist. Tatsächlich erkennt man den wachsenden Radius R gegenüber einem Drehpunkt 14 insbesondere in der Seitenansicht nach der Fig. 2. Zu diesem Zweck ist die Handhabe 10, 11 in dem Drehpunkt 14 an das Gehäuse 5 drehbar angeschlossen. Bei der Handhabe 10, 11 handelt es sich insgesamt um einen an das Gehäuse 5 angelenkten Schwenkhebel 10, 11 mit Quersteg 15.

Die Handhabe 10, 11 selbst ist seinerseits zweiteilig mit einem Bestätigungsarm 10 und einem die Steuerkurve 9 aufweisenden Steuerarm 11 ausgebildet. Der Betätigungsarm 10 und der Steuerarm 11 können insgesamt einstückig ausgelegt sein. Außerdem mag es sich hier um jeweils Flachschenkel handeln, die durch eine gemeinsame Handhabe miteinander gekoppelt sind. Um die Handhabe bzw. den Schwenkhebel 10, 11 und folglich das Messelement 6 von seiner in der Fig. 1 dargestellten Ruhestellung in die Messstellung nach der Fig. 2 zu überführen, wird im Rahmen des Ausführungsbeispiels der Schwenkhebel 10, 11 um seinen Drehpunkt 14 am Gehäuse 5 im in der Fig. 1 dargestellten Uhrzeigersinn verschwenkt.

Als Folge dieser Uhrzeigersinnbewegung des Schwenkhebels 10, 11 wandert der Steuerbolzen 12 entlang der Steuernut 9. Dabei wird das Messelement 6 insgesamt gegen die Gurtoberfläche des Gurtbandes 1 angestellt. Hierbei absolviert der Steuerbolzen 12 insgesamt einen in der Fig. 2 wiedergegebenen Hub H. Tatsächlich wandert der Steuerbolzen 12 beim Übergang von der Ruhestellung gemäß der Fig. 1 in die Messstellung nach der Fig. 2 entlang der Langlöcher 13, 13' vom oberen zum unteren Anschlag dieser Langlöcher 13, Langlöcher 13, 13'.

Nachdem der Steuerbolzen 12 den Hub H überstrichen hat, befindet sich das Messelement 6 in der Messstellung nach der Fig. 2. Je nach Spannungszustand des Gurtbandes 1 wird der Messsteg 6b mehr oder minder verformt. Die Verformungen des Messsteges 6b werden mit Hilfe des einen bzw. der mehreren Sensoren 8 erfasst.

Beim Übergang des Messelementes 6 und folglich des Schwenkhebels 10, 11 von der Ruhestellung nach der Fig. 1 in die Messstellung entsprechend der Fig. 2 wird der Steuerbolzen 12 - wie beschrieben - entlang der Steuernut 9 zur Aufnahme und Führung des fraglichen Steuerbolzens 12 bewegt. Da die Steuerkurve bzw. Steuernut 9 spiralförmig mit von der Ruhestellung zur Messstellung zunehmendem Radius R ausgelegt ist, steigt bei diesem Vorgang das über den Schwenkhebel 10, 11 auf das Messelement 6 übertragene Drehmoment. Das heißt, das Messelement 6 wird mit zunehmender Kraft an die Bandoberfläche des Gurtbandes 1 angestellt. Jedenfalls korrespondiert dies insgesamt in der in Fig. 2 dargestellten Messstellung dazu, dass der Messsteg bzw. der Messabschnitt 6b durch die vom Gurtband 1 auf das Messelement 6 ausgeübte und in der Fig. 3 schematisch dargestellte Kraft F verformt wird. Die Verformung des Messsteges 6b wird mit Hilfe der mehreren Sensoren 8 nach dem Ausführungsbeispiel ermittelt.

Tatsächlich kommen mehrere Sensoren 8 zum Einsatz, die insgesamt als auf Verformungen des Messsteges 6b reagierende Sensoren 8 ausgelegt sind. Hier haben sich Dehnungsmessstreifen als besonders günstig erwiesen. Im Rahmen des Ausführungsbeispieles können zwei oder vier Dehnungsmessstreifen bzw. Sensoren 8 vorgesehen sein, die in üblicher Art und Weise in einer in der Fig. 2 dargestellten Vierbrückenschaltung miteinander gekoppelt sind. Die Vierbrückenschaltung der vier Sensoren 8 im Beispielfall wird mit Hilfe einer Gleichspannung U bestromt. Jeweilige Ausgänge der Vierbrückenschaltung bzw. Brückenschaltung sind an eine Steuereinheit 16 angeschlossen. Die Steuereinheit 16 dient nicht nur zur Auswertung des Signals der einen oder der mehreren Sensoren 8, sondern zusätzlich ist ein an die Steuereinheit 16 angeschlossener Temperatursensor 17 vorgesehen. Mit Hilfe des Temperatursensors 17 kann die Steuereinheit 16 eine Temperaturkompensation des Messsignals der Sensoren 8 vornehmen.

Die Versorgungsspannung U für die Sensoren 8 ebenso wie für die Steuereinheit 16 und eine an die Steuereinheit 16 ausgangsseitig angeschlossene und grundsätzlich optionale Anzeigevorrichtung 18 wird von einer Batterie 20 oder einem Akkumulator zur Verfügung gestellt. Weil die bekannte Vorrichtung relativ wenig Strom benötigt, kann hier beispielsweise mit einer 9 Volt Batterie 20 gearbeitet werden, die ausweislich der Darstellung in der Fig. 2 an die Basis 2 angeschlossen werden kann. Gleiches gilt auch für die Anzeigevorrichtung 18, bei welcher es sich um ein LCD Display handelt oder handeln kann.

Die Steuereinheit 16 ist darüber hinaus noch mit einer Sende-/Empfangseinheit 19 gekoppelt. Über die Sende-/Empfangseinheit 19 können die mit Hilfe der Steuereinheit 16 erfassten Werte für die Verformung des Messsteges 6b und die daraus abgeleiteten Werte der Bandspannung des Gurtbandes 1 insgesamt an einen externen Empfänger bzw. eine Auswerteeinheit 21 übermittelt werden. Hierbei mag es sich um einen Computer oder eine ähnliche Auswerteeinheit 21 handeln. Die externe Auswerteeinheit 21 kann grundsätzlich auch Signale an die Sende-/Empfangseinheit 19 übermitteln und hierdurch die Steuereinheit 16 beaufschlagen, beispielsweise derart, dass Vergleichswerte für die Bandspannung zur zusätzlichen Anzeige auf dem Display 18 oder auch Sollwerte für die Bandspannung des Gurtbandes 1 extern an die zuvor beschriebene Vorrichtung übermittelt werden.

Dadurch lässt sich die fragliche Vorrichtung prinzipiell in ein Computernetzwerk einbinden, mit dessen Hilfe nicht nur die lokal erfassten Werte für das Gurtband 1 hinsichtlich seiner Bandspannung ermittelt und aufgezeichnet werden können. Sondern hierdurch können auch Langzeitüberwachungen, Entwicklungen der Bandspannung über die Zeit, Vergleichsmessungen mit anderen Gurtbändern 1 etc. vorgenommen werden. Hierin sind die wesentlichen Vorteile zu sehen.

Die Steuereinheit 16 und auch die Sende-/Empfangseinheit 19 sind im Ausführungsbeispiel geschützt im Gehäuse 5 untergebracht, und zwar kopfseitig des Gehäuses 5. Schließlich erkennt man noch seitliche Anschläge 7 am Messelement 6, welche seinen Weg begrenzen und Kollisionen mit der Steuereinheit 16 bzw. der Sende-/Empfangseinheit 19 im Innern des Gehäuses 5 verhindern.

## Patentansprüche

1. Vorrichtung zum Erfassen der Bandspannung eines Gurtbandes (1), insbesondere eines Zurrgurtes (1), mit einem gegen eine Bandoberfläche anstellbaren sowie in einem Gehäuse (5) geführten Messelement (6), wobei das Messelement (6) zweiteilig mit im Gehäuse (5) aufgenommenem Führungsabschnitt (6a) und gegen die Bandoberfläche anstellbarem Messabschnitt (6b) ausgebildet ist, und wobei der Messabschnitt (6b) als zwei Führungsschenkel (6a) gurtbandseitiger verbindender Messsteg (6b) ausgebildet ist, und mit zumindest einem dem Messelement (6) zugeordneten Sensor (8), wobei der Sensor (8) Verformungen des Messelementes (6) bei dessen das Gurtband (1) in eine spannungsproportionale Auslenkung zwingenden Anlage erfasst, und wobei das Messelement (6) mit Hilfe einer entlang einer Steuerkurve (9) verfahrbaren Handhabe (10, 11) an das Gurtband (1) angestellt wird,
**dadurch gekennzeichnet, dass**
- der Sensor (8) als auf Verformungen des Messsteges (6b) reagierender Dehnungsmessstreifen ausgebildet ist, wobei
- eine Steuereinheit (16) zur Auswertung des Signals des Sensors (8) vorgesehen ist, und wobei
- eine Sende-/Empfangseinheit (19) an die Steuereinheit (16) angeschlossen ist, um über die Sende-/Empfangseinheit (19) die mit Hilfe der Steuereinheit (16) erfassten Werte für die Verformung des Messsteges (6b) und die daraus abgeleiteten Werte der Bandspannung des Gurtbandes (1) insgesamt an einen externen Empfänger bzw. eine Auswerteeinheit (21) zu übermitteln.

2. Vorrichtung nach Anspruch 1, **dadurch gekennzeichnet, dass** die Handhabe (10, 11) als in einem Drehpunkt (14) an das Gehäuse (5) angelenkter Schwenkhebel (10, 11) ausgebildet ist.

3. Vorrichtung nach Anspruch 1 oder 2, **dadurch gekennzeichnet, dass** die Handhabe (10, 11) zweiteilig mit einem Betätigungsarm (10) und einem die Steuerkurve (9) aufweisenden Steuerarm (11) ausgebildet ist.

4. Vorrichtung nach Anspruch 3, **dadurch gekennzeichnet, dass** der Steuerarm (11) im Drehpunkt (14) an das Gehäuse (5) drehbar angeschlossen ist.

5. Vorrichtung nach Anspruch 3 oder 4, **dadurch gekennzeichnet, dass** die Steuerkurve (9) spiralförmig mit von einer Ruhestellung zur Messstellung zunehmendem Radius (R) ausgebildet ist.

6. Vorrichtung nach einem der Ansprüche 3 bis 5, **dadurch gekennzeichnet, dass** die Steuerkurve (9) als Steuernut (9) zur Aufnahme und Führung eines an das Messelement (6) angeschlossenen Steuerbolzens (12) ausgebildet ist.

7. Vorrichtung nach einem der Ansprüche 1 bis 6, **dadurch gekennzeichnet, dass** das Messelement (6) als Messstempel (6) ausgebildet ist und der Messsteg (6b) in Messstellung des Messstempels (6) sowie be Anlage am Gurtband (1) einem Biegebalken vergleichbare Verformungen aufweist.

8. Vorrichtung nach einem der Ansprüche 1 bis 7, **dadurch gekennzeichnet, dass** mehrere Sensoren (8) vorgesehen sind, die beispielsweise in einer Zweioder Vierbrückenschaltung miteinander verbunden sind.

9. Vorrichtung nach einem der Ansprüche 1 bis 8, **dadurch gekennzeichnet, dass** zusätzlich ein an die Steuereinheit (16) angeschlossener Temperatursensor (17) zur Temperaturkompensation des Messsignals der Sensoren (8) vorgesehen ist.

10. Vorrichtung nach einem der Ansprüche 1 bis 9, **dadurch gekennzeichnet, dass** ein Display (18) an die Steuereinheit (16) angeschlossen ist.

## Claims

1. Device for recording the strap tension of a strap (1), in particular of a lashing strap (1), with a measuring element (6) which can be applied against the strap surface and is guided in a housing (5), wherein the measuring element (6) is configured in two parts with a guiding section (6a) incorporated in the housing (5) and measuring section (6b) that can be applied to the strap surface, and wherein the measuring section (6b) is configured as a measuring bar (6b) connecting two guiding arms (6a) on the strap side, and with at least one sensor (8) assigned to the measuring element (6), wherein the sensor (8) records deformations of the measuring element (6) when it is applied and forces the strap (1) to deflect in a manner proportional to the tension, and wherein the measuring element (6) is applied to the strap (1) by means of a handle (10, 11) that can displaced along a control curve (9),
**characterised in that**
- the sensor (8) is designed as an expansion measuring strip that reacts to deformations of the measuring bar (6b), wherein
- a control unit (16) for evaluating the signal from the sensor (8) is provided, and wherein
- a transmitting/receiver unit (19) is connected to the control unit (16) in order, via the transmitting/receiver unit (19), to send all the measuring bar (6b) deformation values recorded by way of the control unit (16) and the strap (1) tension values derived therefrom to an external receiver and/or an evaluation unit (21).

2. Device according to claim 1 **characterised in that** the handle (10, 11) is designed as a swivelling lever (10, 11) hinged on the housing (5) at a point of rotation (14) .

3. Device according to claim 1 or 2, **characterised in that** the handle (10, 11) is configured in two parts with an operating arm (10) and a control arm (11) which has a control curve (9).

4. Device according to claim 3, **characterised in that** the control arm (11) is connected to the housing (5) in a rotating manner at the point of rotation (14).

5. Device according to claim 3 or 4, **characterised in that** the control curve (9) is designed with a radius (R) that increases from a rest position to the measuring position.

6. Device according to any one of claims 3 to 5, **characterised in that** the control curve (9) is configured as a control groove (9) for receiving and guiding a control bolt (12) connected to the measuring element (6).

7. Device according to any one of claims 1 to 6 **characterised in that** the measuring element (6) is designed as a measuring stamp (6) and the measuring bar (6b) in the measuring position of the measuring stamp (6) as well as when applied to the strap (1) exhibits deformations comparable with a bending bar.

8. Device according to any one of claims 1 to 7 **characterised in that** several sensors (8) are provided which are connected to each other in a two or four-bridge circuit, for example.

9. Device according to any one of claims 1 to 8, **characterised in that** additionally provided is a temperature sensor (17) connected to the control unit (16) for temperature compensation of the measuring signal of the sensors (8).

10. Device according to any one of claims 1 to 9, **characterised in that** a display (18) is connected to the control unit (16).

## Revendications

1. Dispositif, destiné à détecter la tension de bande d'une sangle (1), notamment d'une sangle d'arrimage (1), doté d'un élément de mesure (6), susceptible d'être mis en prise sur une surface de la sangle et guidé dans un boîtier (5), l'élément de mesure (6) étant conçu en deux parties, avec un segment de guidage (6a) réceptionné dans le boîtier (5) et un segment de mesure (6b), susceptible d'être mis en prise sur la surface de la sangle, et le segment de mesure (6b) étant conçu sous la forme d'une barrette de mesure (6b) côté sangle, reliant deux branches de guidage (6a), et doté d'au moins un capteur (8) associé à l'élément de mesure (6), le capteur (8) détectant des déformations de l'élément de mesure (6) lors d'un appui de celui-ci forçant la sangle (1) dans une déviation proportionnelle à la tension, et l'élément de mesure (6) étant mis en prise sur la sangle (1) à l'aide d'une manette (10, 11) déplaçable le long d'une came de commande (9),
**caractérisé en ce que**
- le capteur (8) est conçu sous la forme d'une jauge extensométrique, réagissant à des déformations de la barrette de mesure (6b),
- une unité de commande (16) étant prévue, pour évaluer le signal du capteur (8), et
- une unité émettrice/réceptrice (19) étant connectée sur l'unité de commande (16) pour transmettre en globalité via l'unité émettrice/réceptrice (19) les valeurs détectées par l'intermédiaire de l'unité de commande (16) pour la déformation de la barrette de mesure (6b) et les valeurs qui en sont dérivées pour la tension de bande de la sangle (1) à un récepteur externe ou à une unité d'évaluation (21).

2. Dispositif selon la revendication 1, **caractérisé en ce que** la manette (10, 11) est conçue sous la forme d'un levier pivotant (10, 11) articulé au boîtier (5) sur un point de rotation (14).

3. Dispositif selon la revendication 1 ou 2, **caractérisé en ce que** la manette (10, 11) est conçue en deux parties, avec un bras de manœuvre (10) et un bras de commande (11) comportant la came de commande (9).

4. Dispositif selon la revendication 3, **caractérisé en ce que** le bras de commande (11) est connecté de manière rotative sur le boîtier (5) au point de rotation (14).

5. Dispositif selon la revendication 3 ou 4, **caractérisé en ce que** la came de commande (9) est conçue en forme de spirale, avec un rayon (R) croissant d'une position de repose vers la position de mesure.

6. Dispositif selon l'une quelconque des revendications 3 à 5, **caractérisé en ce que** la came de commande (9) est conçue sous la forme d'une rainure de commande (9), destinée à recevoir et à guider un goujon de commande (12) connecté sur l'élément de mesure (6).

7. Dispositif selon l'une quelconque des revendications 1 à 6, **caractérisé en ce que** l'élément de mesure (6) est conçu sous la forme d'un poinçon de mesure (6) et en position de mesure du poinçon de mesure (6), ainsi qu'en appui sur la sangle (1), la barrette de mesure (6b) comporte des déformations comparables à un fléau flexible.

8. Dispositif selon l'une quelconque des revendications 1 à 7, **caractérisé en ce que** plusieurs capteurs (8) sont prévus, qui sont par exemple reliés l'un à l'autre dans un circuit à deux ponts ou à quatre ponts.

9. Dispositif selon l'une quelconque des revendications 1 à 8, **caractérisé en ce qu'**il est prévu additionnellement un capteur de température (17), connecté sur l'unité de commande (16) pour compenser la température du signal de mesure des capteurs (8).

10. Dispositif selon l'une quelconque des revendications 1 à 9, **caractérisé en ce qu'**un écran (18) est connecté sur l'unité de commande (16).
